(19) Europäisches Patentamt
European Patent Office
Office européen des brevets

(11) **EP 3 457 186 B1**

(12) **EUROPEAN PATENT SPECIFICATION**

(45) Date of publication and mention
of the grant of the patent:
**26.10.2022 Bulletin 2022/43**

(51) International Patent Classification (IPC):
**G02B 6/028** (2006.01)   **G02B 6/036** (2006.01)
**H04B 10/291** (2013.01)   **H04J 14/04** (2006.01)

(21) Application number: **17813231.2**

(22) Date of filing: **09.06.2017**

(52) Cooperative Patent Classification (CPC):
**G02B 6/028; G02B 6/0281; G02B 6/0288;
G02B 6/036; H04B 10/291; H04J 14/04**

(86) International application number:
**PCT/JP2017/021483**

(87) International publication number:
**WO 2017/217334 (21.12.2017 Gazette 2017/51)**

(54) **AN OPTICAL TRANSMISSION SYSTEM**

EIN OPTISCHES ÜBERTRAGUNGSSYSTEM

UN SYSTÈME DE TRANSMISSION OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2016 JP 2016119474**

(43) Date of publication of application:
**20.03.2019 Bulletin 2019/12**

(73) Proprietor: **Nippon Telegraph and Telephone
Corporation
Tokyo 100-8116 (JP)**

(72) Inventors:
- **WADA Masaki
  Musashino-shi
  Tokyo 180-8585 (JP)**
- **MORI Takayoshi
  Musashino-shi
  Tokyo 180-8585 (JP)**
- **SAKAMOTO Taiji
  Musashino-shi
  Tokyo 180-8585 (JP)**
- **YAMAMOTO Takashi
  Musashino-shi
  Tokyo 180-8585 (JP)**
- **NAKAJIMA Kazuhide
  Musashino-shi
  Tokyo 180-8585 (JP)**

(74) Representative: **Brevalex
56, Boulevard de l'Embouchure
B.P. 27519
31075 Toulouse Cedex 2 (FR)**

(56) References cited:
JP-A- S5 315 841        JP-A- 2000 151 521
JP-A- 2005 101 516      JP-A- 2014 170 850
JP-A- 2015 022 083      JP-A- 2015 212 757
US-A- 3 904 268         US-A- 4 057 320
US-A1- 2013 029 038

- YABRE G: "Comprehensive theory of dispersion
  in graded-index optical fibers", JOURNAL OF
  LIGHTWAVE TECHNOLOGY, IEEE, USA, vol. 18,
  no. 2, 1 February 2000 (2000-02-01), pages
  166-177, XP011450438, ISSN: 0733-8724, DOI:
  10.1109/50.822789
- ROBERT OLSHANSKY: "Mode Coupling Effects
  in Graded-Index Optical Fibers", APPLIED
  OPTICS, vol. 14, no. 4, 1 April 1975 (1975-04-01),
  pages 935-945, XP055653060, WASHINGTON,
  DC; US ISSN: 0003-6935, DOI:
  10.1364/AO.14.000935

## Description

## TECHNICAL FIELD

The present invention relates to an optical fiber that enables Raman optical amplification in mode division multiplex transmission, and an optical transmission system including the same.

Priority is claimed on Japanese Patent Application No. 2016-119474 filed on June 16, 2016.

## BACKGROUND ART

Recently, due to the diversification of services, Internet traffic continues to increase. By increasing transmission speed or increasing the number of wavelength multiplexings by a wavelength division multiplexing (WDM) technique, to keep up with the above increase, transmission capacity of an optical fiber has dramatically increased. In addition, further expansion of transmission capacity is expected owing to a digital coherent technique. In a digital coherent transmission system, frequency usage efficiency is enhanced by using a multiple-value phase modulation signal, but a higher signal-to-noise ratio becomes necessary. Nevertheless, in a transmission system that uses a conventional single-mode fiber (SMF), transmission capacity is expected to be saturated at the boundary of 100 Tbit/sec due to an input power limit attributed to a nonlinear effect, in addition to a theoretical, and a further increase in capacity becomes difficult.

In order to further increase transmission capacity in the future, a medium that realizes innovative expansion of transmission capacity is required. Thus, mode division multiplex transmission using a multi-mode fiber (MMF) that can achieve enhancement in space usage efficiency by using a plurality of propagation modes in an optical fiber has attracted attention. Previously, higher-order modes propagating in a fiber had been factors of signal deterioration, but active use of such modes is considered due to the development of digital signal processing, a multiplexing/demultiplex technique, and the like (e.g. refer to Non-Patent Literature 1, 2.).

Furthermore, in mode division multiplex transmission, a method that uses distributed Raman amplification to compensate for a signal-to-noise ratio of a transmission path, similarly to a single-mode transmission path, has been considered, and experiments and calculations have been performed (e.g. refer to Non-Patent Literature 1, 2.).

It is important to reduce a differential modal gain (DMG) in consideration of an optical amplification technique in mode division multiplex transmission. Nevertheless, signal light propagating in an MMF has a different electric field distribution for each mode, and because the size of an overlap of an electric field distribution of signal light and an electric field distribution of pump light differs for each mode, a DMG is generated.

For example, it has been reported that, by setting a propagation mode of pump light to an LP11 mode in a transmission path that uses three-mode distributed Raman amplification, DMG can be reduced, and transmission exceeding 1000 km is possible (e.g. refer to Non-Patent Literature 2.).

In addition, Raman amplification that uses a transmission path (Step-Index (SI)-types fiber) having a step-shaped refractive-index distribution has been considered, and it has been reported that, by setting propagation modes of pump light to an LP21 mode and an LP02 mode, and setting a power ratio therebetween to 7:3, a DMG can be reduced up to 0.13 dB (e.g. refer to Non-Patent Literature 3.).

## PRIOR ART DOCUMENTS

## NON-PATENT DOCUMENTS

[Non-Patent Document 1]
R. Ryf, A. Sierra, R.-J. Essiambre, and S. Randel, A. H. Gnauck, C. Bolle, M. Esmaeelpour, P. J. Winzer, R. Delbue, P. Pupalaikise, A. Sureka, D. W. Peckham, A. McCurdy, and R. Lingle, Jr., "Mode-Equalized Distributed Raman Amplification in 137-km Few-Mode Fiber", ECOC, paper Th.13.K.5. 2011.
[Non-Patent Document 2]
R. Ryf, M. Esmaeelpour, N.K. Fontaine, H. Chen, A.H. Gnauck, R.-J. Essiambre, J. Toulouse, Y. Sun, and R. Lingle, Jr., "Distributed Raman Amplification based Transmission over 1050-km Few-Mode Fiber", ECOC, Tu.3.2.3, 2015.
[Non-Patent Document 3]
R. Ryf, R.-J. Essiambre, J. Hoyningen-Huene, and P. J. Winzer, "Analysis of Mode-Dependent Gain in Raman Amplified Few-Mode Fiber", in Optical Fiber Communication Conference, OSA Technical Digest, paper OW1D.2.2012.
[Non-Patent Document 4]
T. Mori, T. Sakamoto, M. Wada, T. Yamamoto, and F. Yamamoto, "Few-mode Fibers Supporting More Than Two LP Modes For Mode-Division-Multiplexed Transmission With MIMO DSP", J. Lightw. Technol., vol. 32, No. 14, pp. 2468-2479, 2014.
[Non-Patent Document 5]
T. Mori, T. Sakamoto, M. Wada, T. Yamamoto, and K. Nakajima, "Strongly-coupled Two-LP-mode Ring-core Fiber with Optimized Index Profile Considering S-bend Model", OFC., W1F.6, 2016.

The article "Comprehensive Theory of Dispersion in Graded-Index Optical Fibers", G. Member, Journal of Lightwave Technology, Vol. 18, No. 2, February 2000, which presents a theoretical investigation on the dispersion in graded-index silica glass fibers under overfilled launching with equal excitation of modes.

[Non-Patent Document 7]
The article "Mode Coupling Effect in Graded-Index Optical Fibers", Robert Olshansky, Applied Optics, April 1975, Vol. 14, No. 4, pp. 935-94
[Patent Document 1]
Patent Application JP 2015 212757 which discloses a multimode optical fiber and an optical fiber transmission system capable of reducing a group delay difference between propagation modes;
[Patent Document 2]
Patent Application US 4,057,320 which discloses an optical fiber waveguide having minimum modal dispersion.
[Patent Document 3]
Patent Application US 3,904,268 which discloses an optical waveguide having optimal index gradient.
[Patent Document 4]
Patent Application JP 2015/022083 which discloses a multimode optical fiber and an optical fiber transmission system capable of reducing a group delay difference between propagation modes.

## DISCLOSURE OF INVENTION

### PROBLEMS TO BE SOLVED BY THE INVENTION

When the number of modes of a signal to be transmitted increases, accurate control of a mode ratio of pump light becomes necessary to reduce DMG. In this case, a device that accurately controls a mode ratio is required, which complicates device structure and increases cost. Thus, to solve the above problem, the present invention provides an optical fiber and an optical transmission system that can reduce DMG generated in Raman amplification, even if a mode of pump light is a single mode.

### MEANS FOR SOLVING THE PROBLEMS

In order to achieve the above object, an optical transmission system as defined by claim 1 is provided.
The present invention relates to an optical transmission system comprising an optical fiber having a graded index (GI)-type core refractive index profile in which a propagation mode can propagate Z (Z is an integer of 2 or more) or more, and an $\alpha$-parameter having a value in which a propagation constant mutual difference is 1000 rad/m or less in a propagation mode group of a mode group M (M is M = 2p + I - 1 and 3 or more when a propagation mode is denoted by LPlp.).
The optical fiber has a value $\alpha$ of the $\alpha$-parameter that satisfies 1.67 - 0.31exp(-(M-3)/1.80) $\leq \alpha \leq$ 2.37 + 0.63exp(-(M-3)/1.25).
The $\alpha$-parameter is set for each mode group M in which a propagation constant difference is desired to be reduced.
By setting an $\alpha$-parameter of a GI fiber to the above value, a propagation constant difference between propagation modes included in the mode group M is reduced in the GI fiber, and coupling is generated between the propagation modes. Thus, Raman amplification of pump light of one propagation mode included in the mode group M can be performed using the coupled propagation modes as one group, and a DMG can be reduced. An optical fiber that can reduce a DMG generated in Raman amplification, even if a mode of pump light is a single mode, can therefore be provided.
The optical fiber includes a core having an ath-power refractive-index distribution represented by Formula (1) and a clad provided on an outside of the core.

$$n^2(r) = n_1^2(1 - 2\Delta_1(r/a_1)^\alpha) \quad 0 \le r \le a_1$$

$$n^2(r) = n_1^2(1 - 2\Delta_1) \quad a_1 \le r \tag{1}$$

In formula (1), n(r) denotes a refractive index at a position r in a radial direction from a center, $n_1$ denotes a refractive index at a core center, $a_1$ is the core radius, and $\alpha$ denotes an index constant.

In the above configuration, an optical fiber that can reduce a DMG generated in Raman amplification, even if a mode of pump light is a single mode, can be provided.

The structure which includes the above optical fiber and performs Raman amplification using a propagation mode of pump light as one propagation mode in a mode group M is employed as an optical transmission system according to the present invention.

According to the present invention, the optical transmission system is further including a mode converter which converts pump light to perform Raman amplification in the optical fiber into a single propagation mode included in the mode group M, and causes the converted pump light to enter the optical fiber, and a mode multiplexer which multiplexes signal light from two or more and Z or less transmitters, as mutually-different propagation modes, and couples the multiplexed signal light to one end of the optical fiber, at least two of the propagation modes of the signal light being propagation modes included in the mode group M.

As described above, signal light of propagation modes in the mode group M is uniformly amplified by pump light of one propagation mode in the mode group M as one group, and a DMG can be reduced. In addition, even if there exists signal light of a propagation mode not included in the mode group M, a gain of the signal light and a gain of the group can be brought closer, and a DMG can be reduced. An optical transmission system that can reduce a DMG generated in Raman amplification, even if a mode of pump light is a single mode, can therefore be provided.

A fifth aspect of the present invention relates to the optical transmission system according to the above fourth aspect, further including two or more and Z or less receivers, and a remote pump optical amplifier provided between the receivers and the transmitters and including the mode converter and a light source.

According to the above configuration, by combining with the remote pump optical amplification technique, further elongation of the optical transmission system can be realized.

EFFECTS OF THE INVENTION

According to the above aspects of the present invention, an optical fiber and an optical transmission system that can reduce a DMG generated in Raman amplification, even if a mode of pump light is a single mode, can be provided.

BRIEF DESCRIPTION OF THE DRAWINGS

FIG. 1 is a diagram illustrating a Raman transmission system according to the present invention.
FIG. 2 is a diagram illustrating a refractive-index distribution of an optical fiber according to the present invention.
FIG. 3 is a diagram illustrating a relationship between a propagation constant difference $\Delta\beta_{02\text{-}21}$ of an LP21 mode and an LP02 mode in a step-type fiber and a graded index fiber, and a wavelength.
FIG. 4 is a diagram illustrating a relationship between a DMG obtainable when it is supposed that there is no intermode coupling during the propagation in a transmission path, and a ratio of modes included in pump light (LP11 mode and LP21 mode).
FIG. 5 is a diagram illustrating a relationship between a DMG obtainable when it is supposed that there is intermode coupling during the propagation in a transmission path, and a ratio of modes included in pump light (LP11 mode group and LP21 mode).
FIG. 6 is a diagram illustrating a measurement system of a distributed Raman gain.
FIG. 7 is a diagram illustrating a near field pattern of each propagation mode that is obtained after mode conversion.
FIG. 8 is a diagram illustrating a gain spectrum of each propagation mode that is obtainable when pump light enters as an LP01 mode.
FIG. 9 is a diagram illustrating a gain spectrum of each propagation mode that is obtainable when pump light enters as the LP11 mode.
FIG. 10 is a diagram illustrating a gain spectrum of each propagation mode that is obtainable when pump light enters as the LP21 mode.
FIG. 11 is a diagram illustrating a relationship between a pump mode and a DMG in a signal light wavelength of 1550 nm.

FIG. 12 is a diagram illustrating a structure in which a remote pump amplification technique is applied in an optical transmission system according to the present invention.

FIG. 13 is a diagram illustrating a relationship between a $\Delta\beta$ and an $\alpha$-parameter of a GI fiber in the optical fiber according to the present invention.

FIG. 14 is a diagram illustrating a relationship between an M value and an $\alpha$ value in which $\Delta\beta$ becomes 1000 or less in a mode group, in the optical fiber according to the present invention.

FIG. 15 is a diagram illustrating an effective cross-sectional area Aeff in a wavelength of 1550 nm of signal light LP01, LP11, LP21, and LP02 modes in the optical fiber according to the present invention.

FIG. 16 is a diagram illustrating, for each mode, a size fn,m of an overlap of signal light and pump light in the optical fiber according to the present invention.

## EMBODIMENTS FOR CARRYING OUT THE INVENTION

Embodiments of the present invention will be described below with reference to the appended drawings. The embodiments below are not limited. In this specification and the drawings, components with the same reference number are assumed to indicate mutually the same components.

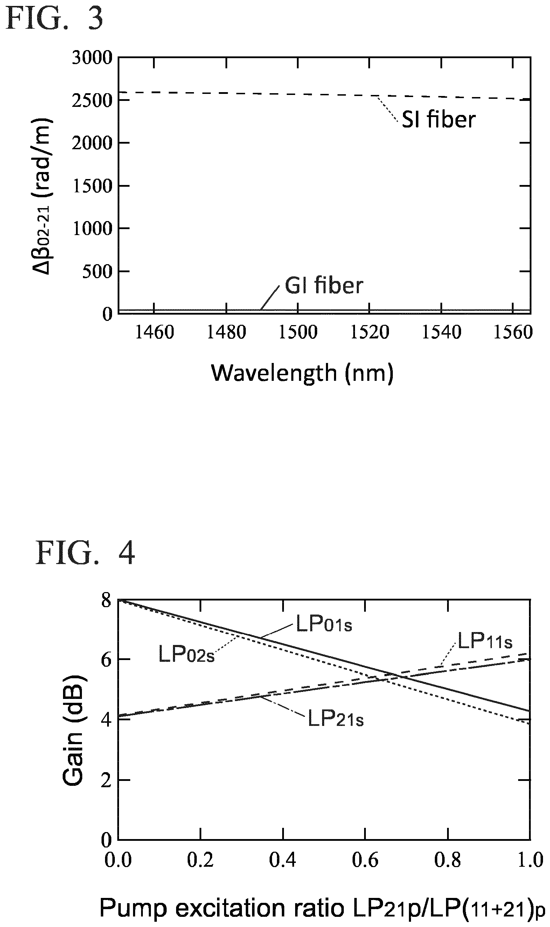

The comparative examples shown in Figures 4-11, 15 and 16 do not form part of the invention but are useful for understanding the invention.

(First Embodiment)

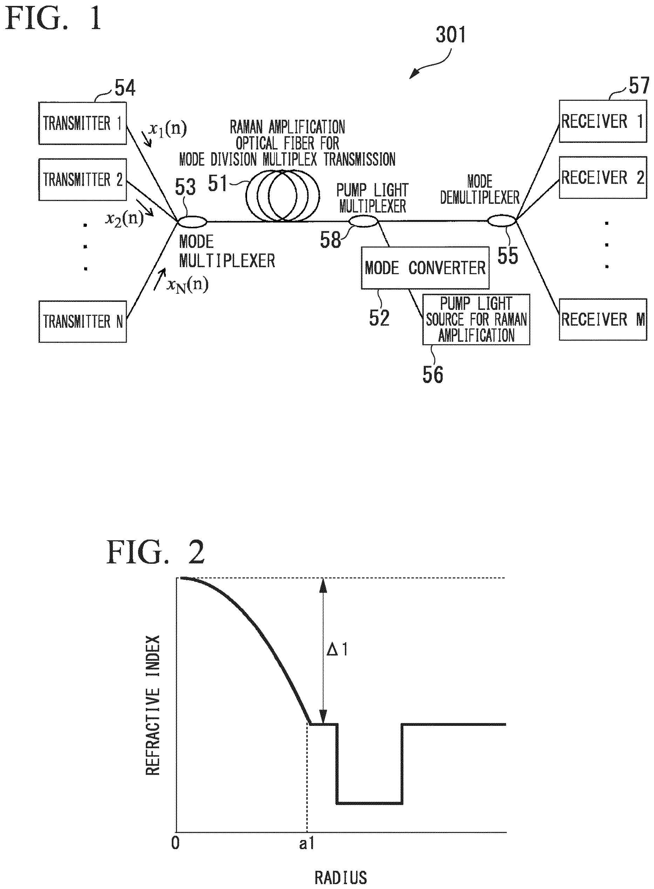

FIG. 1 is a diagram illustrating an optical transmission system 301 of the present embodiment. The optical transmission system 301 includes an optical fiber 51 having a graded index (GI)-type core refractive index profile in which a propagation mode can propagate Z (Z is an integer of 2 or more) or more, a mode converter 52 which converts pump light to perform Raman amplification in the optical fiber 51, into one propagation mode included in a mode group M, and causes the converted pump light to enter the optical fiber 51, and a mode multiplexer 53 which multiplexes signal light from two or more and Z or less transmitters, as mutually-different propagation modes, and couples the multiplexed signal light to one end of the optical fiber 51, and at least two of the propagation modes of the signal light are propagation modes included in the mode group M. Here, the mode group M is a group of propagation modes that satisfy M = 2p+ l - 1 and 3 or more when a propagation mode is denoted by LPlp.

N-type signals transmitted from N transmitters 54 are multiplexed by the mode multiplexer 53. The multiplexed signal light is caused to enter the optical fiber 51, and is demultiplexed into Z ports by a mode demultiplexer 55 installed on an exit side. As a refractive-index distribution of the optical fiber 51 that is used here, a refractive-index distribution in which at least a core portion has a GI-type shape is used. In addition, a pump light source 56 for distributed Raman amplification is included, and the pump light is caused to enter the optical fiber 51 after being converted into a desired mode as necessary by the mode converter 52. In the optical transmission system 301, an example in which pump light enters from a receiver side. Alternatively, pump light can enter from a transmitter side.

FIG. 2 is a diagram illustrating a refractive-index distribution of the optical fiber 51 included in the optical transmission system 301. In the refractive-index distribution in FIG. 2, calculation of a Raman gain to be described later is performed. In addition, the optical fiber 51 can obtain a similar effect by a refractive-index distribution other than the refractive-index distribution having a trench construction as illustrated in FIG. 2. This structure is a GI-type structure that propagates a desired number of propagation modes, and is designed so that a group delay difference between modes becomes small.

FIG. 2 includes a core having an ath-power refractive-index distribution represented by the following formula (1) and a clad on the outside of the core. Here, n(r) denotes a refractive index at a position r in a radial direction from the center, $n_1$ denotes a refractive index at the core center, and $\alpha$ denotes an index constant. The refractive-index distribution of the multi-mode optical fiber that is illustrated in FIG. 2 follows an ath-power refractive-index distribution in a region having a radius r smaller than $a_1$. In addition, the index constant $\alpha$ is a dimensionless parameter indicating a grated-type profile, and is sometime called an alpha parameter. In addition, FIG. 2 includes a trench portion with a reduced refractive index, in a clad region, for restricting the number of propagation modes. The details of the design are reported in Non-Patent Literature 4.

$$n^2(r) = n_1^2(1 - 2\Delta_1(r/a_1)^\alpha) \quad 0 \le r \le a_1$$

$$n^2(r) = n_1^2(1 - 2\Delta_1) \quad a_1 \le r \qquad (1)$$

As the optical fiber having the refractive-index distribution in FIG. 2, not only a group delay difference between modes becomes small, but also propagation constants become very close in mode groups in which the mode groups M (M is a mode group including LPlp modes satisfying M = 2p + I - 1) are three or more, and strong coupling is easily generated in the groups. Generally, it is known that, if a propagation constant difference between modes is 1000 or less, mode coupling is generated by an effect of bending or torsion of a transmission path, or the like (e.g. refer to Non-Patent Literature 5).

In other words, the optical fiber 51 is an optical fiber having a graded index (GI)-type core refractive index profile in which a propagation mode can propagate Z (Z is an integer of 2 or more) or more, and an $\alpha$-parameter is a value in which a propagation constant mutual difference is 1000 rad/m or less in a propagation mode group of the mode group M (M is M = 2p + I - 1 and 3 or more when a propagation mode is denoted by LPlp).

In addition, also in the consideration of Non-Patent Literature 1 and Non-Patent Literature 2, a GI-shaped transmission path is used. Nevertheless, these Non-Patent literatures discuss reducing a group delay difference between modes of a transmission path, and do not describe achieving a reduction in a propagation constant difference between propagation modes that is discussed in the present embodiment.

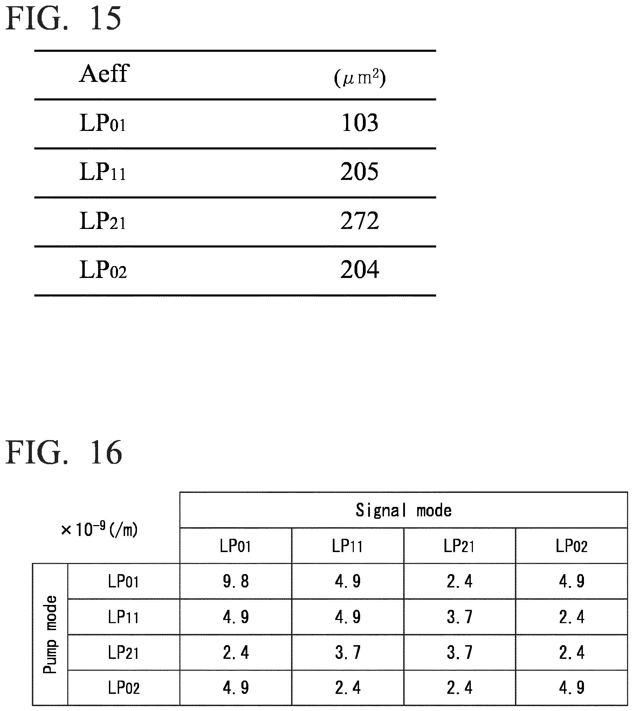

Here, as an example, the description will be given using an optical fiber that can propagate signal light LP01, LP11, LP21, and LP02 modes. FIG. 15 illustrates an effective area Aeff in a wavelength of 1550 nm of the signal light LP01, LP11, LP21, and LP02 modes that propagate in the optical fiber having the refractive-index distribution in FIG. 2.

FIG. 3 is a diagram illustrating a relationship between a propagation constant difference $\Delta\beta_{02\text{-}21}$ of the LP21 mode and the LP02 mode in a fiber having a step-shaped refractive-index distribution, and an optical fiber having the refractive-index distribution in FIG. 2, and a wavelength. The step-shaped SI fiber being a comparative example has a core radius of 7 $\mu$m, and a specific refractive index difference of a core of 0.7%.

By the result of calculation, it can be confirmed that, in the SI fiber, about 2500 rad/m of $\Delta\beta_{02\text{-}21}$ is generated in all bands in which calculation has been performed. On the other hand, in the GI fiber having the refractive-index distribution in FIG. 2, $\Delta\beta_{02\text{-}21}$ becomes small to about 50 rad/m, and the LP21 mode and the LP02 mode can be expected to sufficiently coupled during transmission.

Next, calculation of a gain in distributed Raman amplification that uses an optical fiber having the refractive-index distribution in FIG. 2 is performed. The calculation of a Raman gain generated for each mode is performed in the following manner.

A signal strength Sm of an mth mode can be represented by a propagation equation in the following formula (2).

$$\frac{dS_m}{dz} = -\alpha_s S_m + \gamma_R \left( \sum_n f_{n,m} P_n^- \right) S_m \qquad (2)$$

A pump light power P- of an nth mode that enters from a rear side (receiver side) of the optical fiber 51 can be represented by a propagation equation in the following formula (3). In addition, the same applies to a case where pump light is caused to enter from a front side (transmitter side) of the optical fiber 51.

$$\frac{dP_n^-}{dz} = \alpha_p P_n^- + \frac{\lambda_s}{\lambda_p} \gamma_R \left( \sum_n f_{n,m} S_m \right) P_n^- \qquad (3)$$

Here, $\alpha$s and $\alpha$p denote propagation losses of signal light and pump light, $\gamma_R$ denotes a Raman gain coefficient, and $\lambda$s and $\lambda$p denote wavelengths of signal light and pump light. In addition, fn,m denotes a intensity overlap integral of signal light and pump light, and can be represented by the following formula (4).

$$f_{n,m} = \frac{\iint_{-\infty}^{+\infty} S_m(x,y)P_n(x,y)dxdy}{\iint_{-\infty}^{+\infty} S_m(x,y)dxdy \iint_{-\infty}^{+\infty} P_n(x,y)dxdy}$$

$$(4)$$

It can be confirmed by the above-described formulae that a gain of each propagation mode in multi-mode Raman amplification can be controlled by the fn,m. The fn,m varies by changing a propagation mode of incident pump light with respect to a propagation mode of signal light.

FIG. 16 illustrates the size of fn,m that is obtainable when a mode of pump light is the LP01, LP11, LP21, or LP02 mode with respect to a propagation mode of signal light, in the optical fiber having the refractive-index distribution in FIG. 2. Here, calculation has been performed assuming that a wavelength of signal light is 1550 nm, and a wavelength of pump light is 1450 nm. In addition, here, an effect of coupling of the LP21 mode and the LP02 mode is not considered.

From Table in FIG. 16, it can be confirmed that, when coupling between modes that propagate in the optical fiber is sufficiently small (in the case of SI fiber), if a pump light mode is a single mode, a intensity overlap integral with a pump light distribution differs depending on a mode of signal light. In addition, "sufficiently small coupling" means that a propagation constant difference $\beta$ is 1000 rad/m or more, as described in FIG. 3.

First of all, it is supposed that there is no coupling between modes in the transmission path in the SI fiber, and calculation of a Raman gain is performed. FIG. 4 illustrates a calculation result obtained when a gain of each propagation mode and a pump ratio of pump modes are changed. A horizontal axis indicates a power ratio of the LP11 and LP21 modes included in pump light. A vertical axis indicates a gain of each propagation mode with respect to a strength ratio of pump light. Referring to FIG. 3, for minimizing a gain difference between four LP modes, it is necessary to set a power ratio of pump light of the LP21 mode and the LP02 mode (pump light ratio, LP21:LP02) to 64:36, and cause the pump light to enter a transmission path.

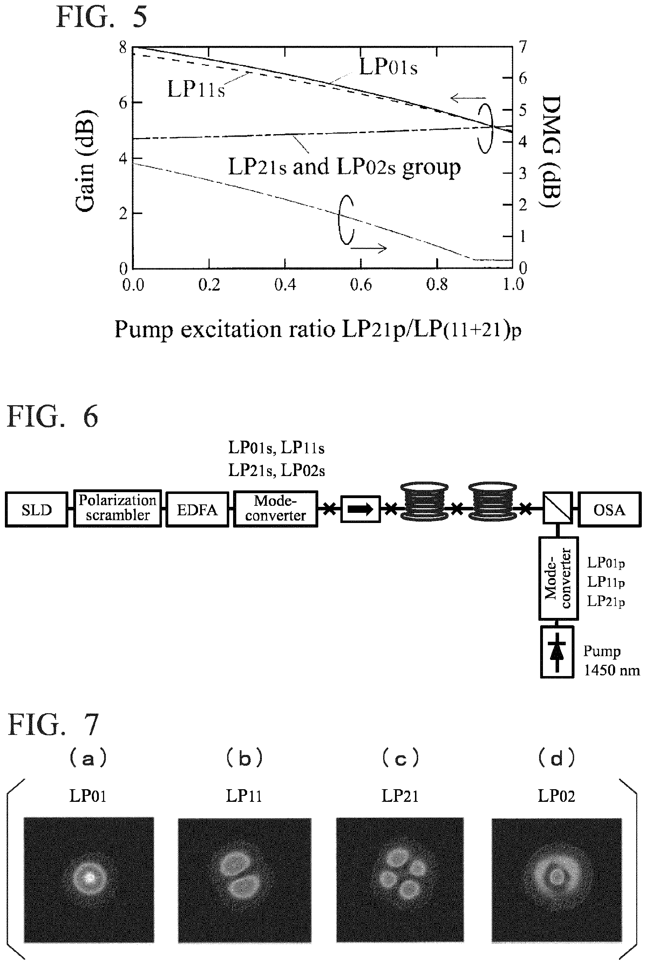

Next, calculation of a Raman gain that is obtainable when it is supposed that coupling of the LP21 mode and the LP02 mode is generated in the transmission path in the GI fiber ($\Delta\beta_{02\text{-}21}$ is sufficiently small) is performed. FIG. 5 illustrates a calculation result obtained when a gain of each propagation mode and an power ratio of pump modes are changed A horizontal axis indicates a power ratio of the LP11 and LP21 modes included in pump light. A left vertical axis indicates a gain of each propagation mode with respect to a power ratio of pump light. A right vertical axis indicates DMGs of all propagation modes with respect to a power ratio of pump light. In the calculation of the GI fiber, gains of the LP21 mode and the LP02 mode are calculated as one group, and the result becomes equal to a result obtained when the LP21 mode and the LP02 mode propagate with equal strength.

It can be confirmed from FIG. 5 that a DMG can be suppressed to 0.3 dB or less at the time of an on/off gain of 5 dB in excitation with pump light having a single mode, i.e., the LP21 mode (point with pump light ratio 1.0). In other words, by promoting coupling of the LP21 mode and the LP02 mode using a GI fiber having a sufficiently-small $\Delta\beta_{02\text{-}21}$, a gain of each propagation mode (the LP21 mode and the LP02 mode are one group) can be made equal at the point of pump light that has a pump light ratio 1.0 (in FIG. 4, while a pump light ratio is set to 64:36, a pump light ratio is set to 100:0 in FIG. 5.). FIG. 5 illustrates a case where pump light has the LP21 mode, but the same applies to a case where pump light has the LP02 mode.

Next, whether a DMG can be reduced is experimentally checked. FIG. 6 illustrates a measurement system of a distributed Raman gain. A Super luminescent diode (SLD) is used as a light source of signal light, and after polarization scrambling is performed for reducing polarization dependence, conversion to a ratio measurement mode is performed, and then, signal light is caused to enter a transmission path. The transmission path used for the measurement this time is a trench-type GI fiber as illustrated in FIG. 1, and has a strip length of 71 km in total by vertically connecting fibers that can propagate six LP modes and four LP modes. An $\alpha$-parameter of the connected GI fiber is in a range of 1.85-2.10.

Also, FIG. 7 illustrates a near field pattern entering the transmission path provided subsequently to a mode converter. A strength distribution of each of the LP01, LP11, LP21, and LP02 modes can be confirmed. In addition, pump light for distributed Raman amplification (wavelength of 1450 nm) has a configuration of entering from a subsequent stage of the transmission path, and a mode of pump light is caused to enter the transmission path after being converted into the LP01, LP11 or LP21 mode through a phase filter type mode converter after being emitted from a pump light source.

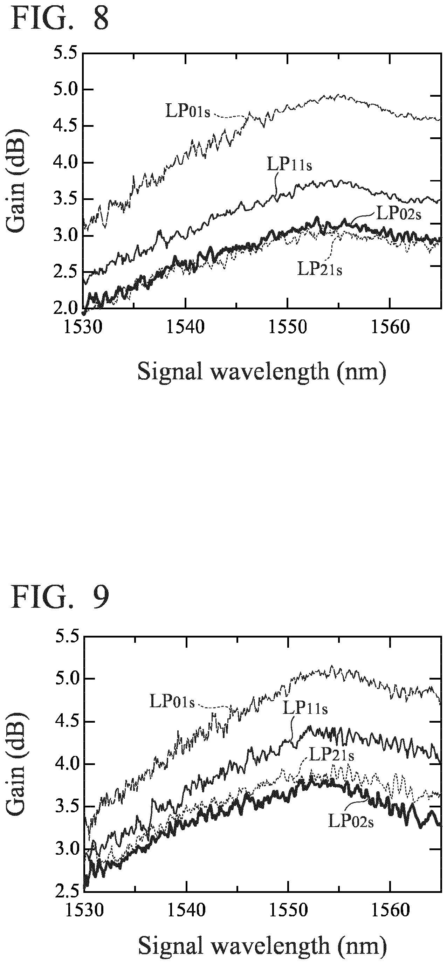

FIG. 8 illustrates a result of a gain spectrum obtainable when pump light enters as the LP01 mode. In this experiment, adjustment of a pump light power is performed so that the maximum on/off gain of the LP01 mode becomes about 5 dB. As can be confirmed from the calculation, the signal light LP01 mode obtains the largest gain, and the LP11 obtains a secondly-large gain. On the other hand, the LP21 and the LP02 modes obtain substantially similar gains. If the LP21 mode and the LP02 mode are not coupled, the LP02 mode is expected to obtain a larger gain than the LP21 mode as illustrated in FIG. 16. Nevertheless, because the LP21 mode and the LP02 mode obtain substantially equal gains as illustrated in FIG. 8, coupling of the LP21 mode and the LP02 mode as indicated in the calculation of FIG. 5 is considered to be generated in the transmission path used for the measurement.

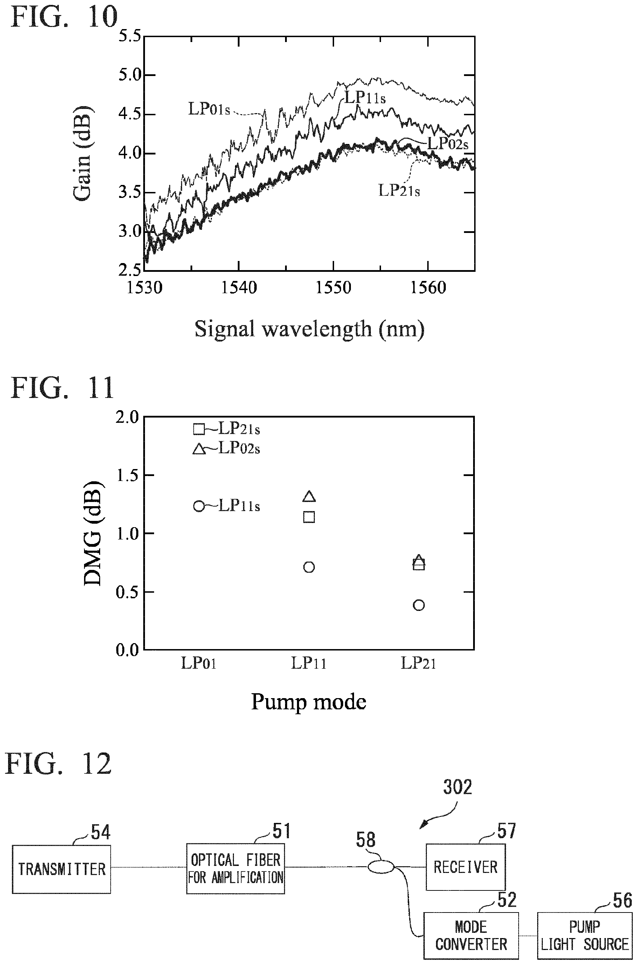

FIGS. 9 and 10 each illustrate a gain spectrum of each propagation mode that is obtainable when pump light is set to the LP11 mode or the LP21 mode. It can be confirmed that gains of the respective propagation modes come closer and DMGs becomes smaller, as pump light is set to LP01 in FIG. 8, LP11 in FIG. 9, and LP21 in FIG. 10. In addition, similarly to the LP01 mode excitation, it can be confirmed that gains of the LP21 mode and the LP02 mode have similar values irrespective of a propagation mode of pump light.

FIG. 11 illustrates a relationship between a propagation mode of pump light and a DMG of each propagation mode of signal light. A wavelength of signal light is 1550 nm. It was confirmed that a DMG (DMG of LP01 and LP21) that has been 1.9 dB when pump light is in the LP01 mode can be improved to a DMG (DMG of LP01 and LP02) of 0.8 dB when pump light is in the LP21 mode.

In the present comparative example, to solve the problem, a GI fiber (a propagation mode can propagate Z (Z is an integer of 2 or more) or more) that has an $\alpha$-parameter being a value in which a propagation constant mutual difference is 1000 rad/m or less in a propagation mode group of the mode group M (M is M = 2p + l - 1 and 3 or more when a propagation mode is denoted by LPlp.) is used as an optical fiber for Raman amplification. By using such an optical fiber, coupling of signal light of propagation modes included in the mode group M is promoted. Thus, signal light of propagation modes included in the mode group M can obtain gains as one mode group at the time of Raman amplification. Furthermore, if coupling of signal light of propagation modes is promoted, a pump light ratio at a point at which a gain of the mode group and a gain of another propagation mode not included in the mode group M become equal at the time of Raman amplification becomes 1.0 or 0.0 (propagation mode of pump light is one). Thus, the optical transmission system 301 of the present comparative example can reduce a DMG even if a propagation mode of pump light is one. In addition, it is preferable to use pump light of one propagation mode in the mode group M, as pump light.

Second Embodiment

The present embodiment relates to an optical transmission system combined with a remote pump optical amplification technique for elongating an optical transmission system. FIG. 12 is a diagram illustrating an optical transmission system 302 of the present embodiment. The optical transmission system 302 includes a transmitter 54, the optical fiber 51, a pump light multiplexer 58, a receiver 57, and a remote pump optical amplifier. The remote pump optical amplifier includes the mode converter 52 and the light source 56.

The optical fiber 51 is a GI-shaped optical fiber as illustrated in FIG. 2, and is implemented by installing the remote pump optical amplifier at an intermediate portion of the transmitter 54 and the receiver 57. As a mode of pump light entering the optical fiber 51, one mode is selectively used from among a group in which mode groups M (M is a mode group including an LPlp mode that satisfies M = 2p + l - 1) that propagate in the optical fiber 51 are three or more. FIG. 12 illustrates an example in which pump light enters from the receiver 57 side. By combining with the remote pump optical amplification technique in this manner, further elongation can be realized.

Third Embodiment

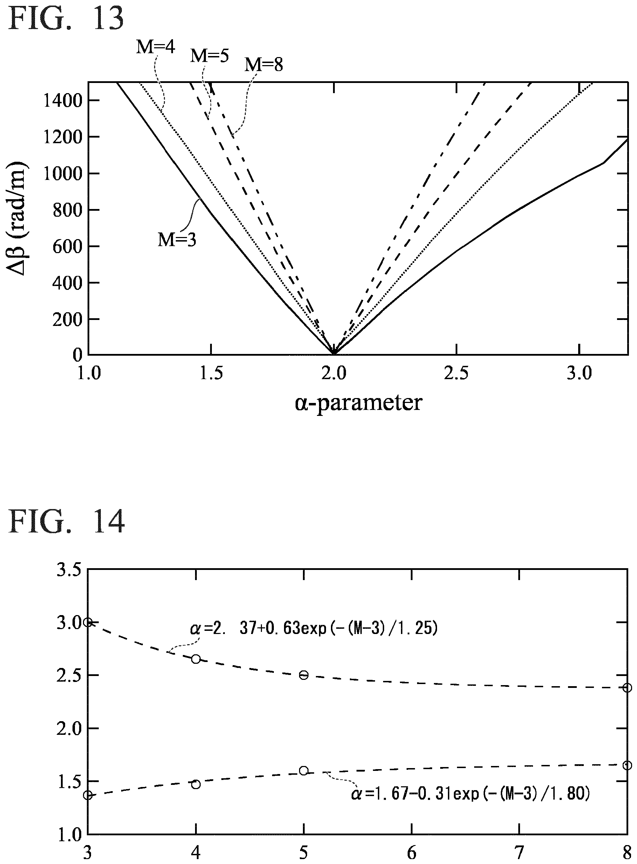

In the present embodiment, an $\alpha$-parameter in a case where mode groups exceed three will be described. FIG. 13 illustrates a result obtained by performing calculation for a relationship between $\Delta\beta$ of mode groups M being three or more, and an $\alpha$-parameter of a GI fiber. This indicates results of $\Delta\beta$ between the LP21 and the LP02 modes for M = 3, between the LP31 and the LP12 modes for M = 4, between the LP41 and the LP03 modes having the largest $\Delta\beta$ for M = 5, and between the LP14 and the LP71 modes for M = 8.

Next, FIG. 14 illustrates a graph obtained by plotting a region of an $\alpha$-parameter in which $\Delta\beta$ becomes 1000 rad/m or less in the mode group with respect to M values. When fitting is performed on the calculation result, by using a region of an $\alpha$-parameter in which $1.67 - 0.31\exp(-(M-3)/1.80) \le \alpha \le 2.37 + 0.63\exp(-(M-3)/1.25)$ is satisfied, coupling in the mode group M can be promoted, and a DMG can be reduced.

**INDUSTRIAL APPLICABILITY**

The embodiments of the present invention are not limited to the above and are only limited by appended claims. The present invention can be implemented in forms in which various modifications and improvements are performed based on the knowledge of one skilled in the art.

**DESCRIPTION OF THE REFERENCE SYMBOLS**

| 51: | Optical fiber |
| 52: | Mode converter |
| 53: | Mode multiplexer |
| 54: | Transmitter |
| 55: | Mode demultiplexer |
| 56: | Light source |
| 57: | Receiver |
| 58: | Pump light multiplexer |
| 301, 302: | Optical transmission system |

**Claims**

1. An optical transmission system (301; 302) comprising an optical fiber (51), wherein
the optical fiber is a multimode optical fiber has a core with a graded refractive index profile, arranged for the propagation of at least Z modes, where Z is an integer of 2 or more, wherein the multimode optical fiber comprises a core having an ath-power refractive-index distribution represented by Formula (1) and a clad provided on an outside of the core, wherein Formula (1) states:

$$n^2(r) = n_1^2 (1 - 2\Delta_1 (r/a_1)^\alpha) \quad 0 \le r \le a_1$$

$$n^2(r) = n_1^2 (1 - 2\Delta_1) \quad a_1 \le r \tag{1}$$

where n(r) denotes a refractive index at a position r in a radial direction from a center, $n_1$ denotes a refractive index at a core center, $a_1$ is the core radius, and $\alpha$ denotes an alpha parameter;

said alpha parameter $\alpha$ satisfies 1.67 - 0.31exp(-(M-3)/1.80) $\le \alpha \le$ 2.37 + 0.63exp(-(M-3)/1.25) such that a mutual difference between propagation constants is 1000 rad/m or less in a mode group M that the multimode optical fiber can propagate, where M is a mode group including LPlp modes satisfying M = 2p + l -1, where M is 3 or more; and
**characterized in that** said optical transmission system (301; 302) is adapted to perform Raman amplification; and **in that** the optical transmission system further comprises :

a mode converter (52) arranged to convert pump light to perform Raman amplification in the multimode optical fiber (51) into a single propagation mode included in the mode group M, and causes the converted pump light to enter the multimode optical fiber (51); and
a mode multiplexer (53) arranged to multiplex signal light from two or more and Z or less transmitters (54), as mutually-different propagation modes, and arranged to couple the multiplexed signal light to one end of the multimode optical fiber (51), at least two of the propagation modes of the signal light being propagation modes included in the mode group M.

2. . The optical transmission system (301; 302) according to Claim 1, further comprising:

two or more and Z or less receivers (57); and
a remote pump optical amplifier provided between the receivers (57) and the transmitters (54) and including a light source (56)

**Patentansprüche**

1. Ein optisches Übertragungssystem (301; 302), das eine optische Faser (51) aufweist, wobei

die optische Faser eine optische Multimode-Faser ist, die einen Kern mit einem abgestuften Brechungsindexprofil aufweist, der für die Ausbreitung von mindestens Z Moden angeordnet ist, wobei Z eine ganze Zahl von 2 oder mehr ist, wobei die optische Multimode-Faser einen Kern mit einer $\alpha$-ten Brechungsindexverteilung, die durch die Formel (1) dargestellt wird, und einen Mantel aufweist, der an einer Außenseite des Kerns zur Verfügung gestellt ist, wobei die Formel (1) lautet:

$$n^2(r) = n_1^2(1 - 2\Delta_1(r/a_1)^\alpha) \quad 0 \le r \le a_1$$

$$n^2(r) = n_1^2(1 - 2\Delta_1) \quad a_1 \le r \qquad (1)$$

wobei n(r) den Brechungsindex an einer Position r in radialer Richtung von einem Zentrum, $n_1$ den Brechungsindex in einem Kernzentrum, $a_1$ den Kernradius und $\alpha$ einen Alpha-Parameter bezeichnen; der Alpha-Parameter $\alpha$ erfüllt 1,67 - 0,31 exp(-(M-3)/1,80) $\le \alpha \le$ 2,37 + 0,63exp(-(M-3)/1,25), so dass eine gegenseitige Differenz zwischen Ausbreitungskonstanten 1000 rad/m oder weniger in einer Modengruppe M beträgt, die sich in der optischen Multimode-Faser ausbreiten kann, wobei M eine Modengruppe ist, die LPlp-Moden aufweist, die M = 2p + I - 1 erfüllen, wobei M 3 oder mehr ist; und **dadurch gekennzeichnet, dass** das optische Übertragungssystem (301; 302) dazu ausgebildet ist, eine Raman-Verstärkung durchzuführen; und dass das optische Übertragungssystem darüber hinaus aufweist:

einen Modenkonverter (52), der Pumplicht zur Durchführung einer Raman-Verstärkung in der Multimode-Lichtleitfaser (51) in eine einzelne, in der Modengruppe M ausgewiesene Ausbreitungsmode umwandelt und bewirkt, dass das umgewandelte Pumplicht in die Multimode-Lichtleitfaser (51) eintritt; und einen Modenmultiplexer (53), welcher derart angeordnet ist, dass er Signallicht von zwei oder mehr und Z oder weniger Sendern (54) als gegenseitig unterschiedliche Ausbreitungsmoden multiplexiert, und der so angeordnet ist, dass er das gemultiplexte Signallicht an ein Ende der optischen Multimodefaser (51) koppelt, wobei mindestens zwei der Ausbreitungsmoden des Signallichts Ausbreitungsmoden sind, die in der Modengruppe M vorhanden sind.

2. Das Optische Übertragungssystem (301; 302) nach Anspruch 1, ferner aufweisend:

zwei oder mehr und Z oder weniger Empfänger (57); und einen entfernten optischen Pumpverstärker, der zwischen den Empfängern (57) und den Sendern (54) angeordnet ist und eine Lichtquelle (56) aufweist.

## Revendications

1. Système de transmission optique (301 ; 302) comprenant une fibre optique (51), dans lequel

la fibre optique est une fibre optique multimodale présentant une âme avec un profil à gradient d'indice de réfraction, agencée pour la propagation d'au moins Z modes, où Z est un entier supérieur ou égal à 2, dans lequel la fibre optique multimodale comprend une âme présentant une répartition d'indice de réfraction à puissance $\alpha$ représentée par une formule (1) et une gaine prévue sur un extérieur de l'âme, dans lequel la formule (1) stipule :

$$n^2(r) = n_1^2(1 - 2\Delta_1(r/a_1)^\alpha) \quad 0 \le r \le a_1$$

$$n^2(r) = n_1^2(1 - 2\Delta_1) \quad a_1 \le r \qquad (1)$$

où n(r) représente un indice de réfraction à une position r dans une direction radiale par rapport à un centre, $n_1$ représente un indice de réfraction à un centre d'âme, $a_1$ est le rayon de l'âme, et $\alpha$ représente un paramètre alpha ; ledit paramètre alpha $\alpha$ satisfait 1,67 - 0,31exp(-(M-3)/1,80) $\le \alpha \le$ 2,37 + 0,63exp(-(M-3)/1,25) de sorte qu'une différence réciproque entre des constantes de propagation soit 1000 rad/m ou moins dans un groupe de mode M que la fibre optique multimodale peut propager, où M est un groupe de mode comprenant LPlp modes satisfaisant M = 2p + I - 1, où M est supérieur ou égal à 3 ; et

**caractérisé en ce que**

ledit système de transmission optique (301 ; 302) est apte à réaliser une amplification Raman ;

et **en ce que** le système de transmission optique comprend en outre :

un convertisseur de mode (52) disposé pour convertir une lumière de pompage pour réaliser une amplification Raman dans la fibre optique multimodale (51) en un mode de propagation unique compris dans le groupe de mode M, et amène la lumière de pompage convertie à entrer dans la fibre optique multimodale (51) ; et

un multiplexeur de mode (53) disposé pour multiplexer une lumière de signal depuis deux ou plus et Z ou moins émetteurs (54), en tant que modes de propagation réciproquement différents, et disposé pour coupler la lumière de signal multiplexée à une extrémité de la fibre optique multimodale (51), au moins deux des modes de propagation de la lumière de signal étant des modes de propagation compris dans le groupe de mode M.

2. Système de transmission optique (301 ; 302) selon la revendication 1, comprenant en outre :

deux ou plus et Z ou moins récepteurs (57) ; et

un amplificateur optique de pompage à distance prévu entre les récepteurs (57) et les émetteurs (54) et comprenant une source lumineuse (56).

# FIG. 1

301

# FIG. 2

FIG. 3

FIG. 4

## FIG. 5

Pump excitation ratio LP21p/LP(11+21)p

## FIG. 6

## FIG. 7

## FIG. 8

## FIG. 9

FIG. 10

FIG. 11

FIG. 12

FIG. 13

FIG. 14

FIG. 15

| Aeff | ($\mu m^2$) |
|---|---|
| $LP_{01}$ | 103 |
| $LP_{11}$ | 205 |
| $LP_{21}$ | 272 |
| $LP_{02}$ | 204 |

FIG. 16

| $\times 10^{-9}$ (/m) | | Signal mode | | | |
|---|---|---|---|---|---|
| | | $LP_{01}$ | $LP_{11}$ | $LP_{21}$ | $LP_{02}$ |
| Pump mode | $LP_{01}$ | 9. 8 | 4. 9 | 2. 4 | 4. 9 |
| | $LP_{11}$ | 4. 9 | 4. 9 | 3. 7 | 2. 4 |
| | $LP_{21}$ | 2. 4 | 3. 7 | 3. 7 | 2. 4 |
| | $LP_{02}$ | 4. 9 | 2. 4 | 2. 4 | 4. 9 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016119474 A
- JP 2015212757 A
- US 4057320 A
- US 3904268 A
- JP 2015022083 A

### Non-patent literature cited in the description

- **R. RYF ; A. SIERRA ; R.-J. ESSIAMBRE ; S. RANDEL ; A. H. GNAUCK ; C. BOLLE ; M. ESMAEELPOUR ; P. J. WINZER ; R. DELBUE ; P. PUPALAIKISE.** Mode-Equalized Distributed Raman Amplification in 137-km Few-Mode Fiber. *ECOC, paper Th.13.K.5.,* 2011
- **R. RYF ; M. ESMAEELPOUR ; N.K. FONTAINE ; H. CHEN ; A.H. GNAUCK ; R.-J. ESSIAMBRE ; J. TOULOUSE ; Y. SUN ; R. LINGLE, JR.** Distributed Raman Amplification based Transmission over 1050-km Few-Mode Fiber. *ECOC, Tu.3.2.3,* 2015
- **R. RYF ; R.-J. ESSIAMBRE ; J. HOYNINGEN-HUENE ; P. J. WINZER.** Analysis of Mode-Dependent Gain in Raman Amplified Few-Mode Fiber. *Optical Fiber Communication Conference, OSA Technical Digest, paper OW1D.2.,* 2012
- **T. MORI ; T. SAKAMOTO ; M. WADA ; T. YAMAMOTO ; F. YAMAMOTO.** Few-mode Fibers Supporting More Than Two LP Modes For Mode-Division-Multiplexed Transmission With MIMO DSP. *J. Lightw. Technol.,* 2014, vol. 32 (14), 2468-2479
- **T. MORI ; T. SAKAMOTO ; M. WADA ; T. YAMAMOTO ; K. NAKAJIMA.** Strongly-coupled Two-LP-mode Ring-core Fiber with Optimized Index Profile Considering S-bend Model. *OFC., W1F.6,* 2016
- **G. MEMBER.** Comprehensive Theory of Dispersion in Graded-Index Optical Fibers. *Journal of Lightwave Technology,* February 2000, vol. 18 (2
- **ROBERT OLSHANSKY.** Mode Coupling Effect in Graded-Index Optical Fibers. *Applied Optics,* April 1975, vol. 14 (4), 935-94